# EUROPEAN PATENT SPECIFICATION

(11) **EP 3 049 635 B1**
(45) Date of publication and mention of the grant of the patent: **06.02.2019**
(21) Application number: 14846624.6
(22) Date of filing: 02.09.2014
(51) Int. Cl.: F01D 5/28, F02C 7/00

(54) **ALUMINUM AIRFOIL WITH TITANIUM COATING**
ALUMINIUMSCHAUFEL MIT TITANBESCHICHTUNG
PROFIL AÉRODYNAMIQUE EN ALUMINIUM POURVU D'UN REVÊTEMENT EN TITANE

(30) Priority: 17.09.2013 US 201361878840 P
(43) Date of publication of application: 03.08.2016
(73) Proprietor: United Technologies Corporation, Farmington, CT 06032 (US)
(72) Inventor: PARKOS, Joseph. Jr., East Haddam, CT 06423 (US); HANSEN, James O., Glastonbury, CT 06033 (US); MEYER, Jesse C., Colchester, CT 06415 (US)
(74) Representative: Dehns
(86) International application number: PCT/US2014/053653
(87) International publication number: WO 2015/041841

(56) References cited:
- EP-A1- 1 302 562
- EP-A1- 1 918 093
- EP-A2- 2 348 192
- EP-A2- 2 362 066
- EP-A2- 2 362 067
- WO-A1-96/00842
- US-A- 4 832 993
- US-A- 5 120 596
- US-A- 5 141 400
- US-A- 5 876 651
- US-A1- 2011 211 967
- US-A1- 2013 004 323

## Description

### BACKGROUND

This invention is related to airfoils, and more particularly to aluminum airfoils.

Gas turbine engines comprise one or more rotating turbines that are used to extract energy from a high velocity and high temperature gas flow produced within the gas turbine engine. The turbines are comprised of a plurality of radially extending airfoil blades that are connected at their inner diameter ends to a rotor, which is connected to a shaft that rotates within the engine as the blades interact with the gas flow. The rotor typically comprises a disk having a plurality of axial retention slots that receive mating root portions of the blades to prevent radial dislodgment. Blades typically also include inner diameter platforms that prevent the high temperature gases from escaping through the radial retention slots. Between stages of the turbine blades are disposed a plurality of radially extending stationary airfoil vanes, which are typically supported by inner and outer diameter shrouds that are suspended from an outer engine case and supported by an inner structure, respectively. During operation of the engine, the turbine blades and vanes are subjected to high heat from combustion products. Additionally, the blades are subjected to large centrifugal loads due to spinning and large gas loads causing twisting and bending of the airfoil. As a result, the outermost surface of the airfoil is the most highly stressed. It is, therefore, a constant design challenge to develop materials for turbine blades and vanes that are more heat resistant to reduce cooling demands, lighter to increase propulsive efficiencies in aircraft engines and stronger to increase stress resistance and capability of the blade.

Titanium alloys and fiber composites are the benchmark classes of materials for fan and compressor blades in commercial airline engines. One reason for the materials being so broadly adopted is that regulations require an engine in commercial service to be capable of ingesting birds while allowing for continued operation or safe and orderly shutdown of that engine. Another reason is that the blades must resist cracking from nicks and dents caused by small debris such as sand and rain. Engines with titanium fan blades as well as certain reinforced fiber composite fan blades with adhesively bonded metallic leading edge sheaths meet these criteria.

While titanium blades are relatively strong and light in weight, composite blades offer sufficient strength and a significant weight savings over titanium. However, composite blades are expensive to process. Further, due to their relatively low strain tolerance, composite blades require a greater thickness than otherwise equivalent metal blades to meet bird strike requirements. Greater blade thickness reduces fan efficiency and offsets a significant portion of weight savings from using composite materials.

European Patent Application No. 1302562 discloses an airfoil with the features of the preamble of claim 1.

European Patent Application No. 2348192 discloses a sheath for an airfoil blade that wraps around the airfoil leading edge and over the airfoil tip.

### SUMMARY

An airfoil includes an aluminum airfoil body with a pressure side, suction side, leading edge and trailing edge; and a titanium foil layer covering at least the entire pressure side or the entire suction side.

### BRIEF DESCRIPTION OF THE DRAWINGS

FIG. 1 is a quarter sectional view that schematically illustrates an example gas turbine engine.
FIG. 2A shows a side view of a blade with a titanium foil covered airfoil and a sheath.
FIG. 2B shows a cross-sectional view of the blade of FIG. 2A along line B-B.
FIG. 2C shows an enlarged view of section C of FIG. 2B.
FIG. 3 shows a block diagram of a method for making a titanium foil covered airfoil.

### DETAILED DESCRIPTION

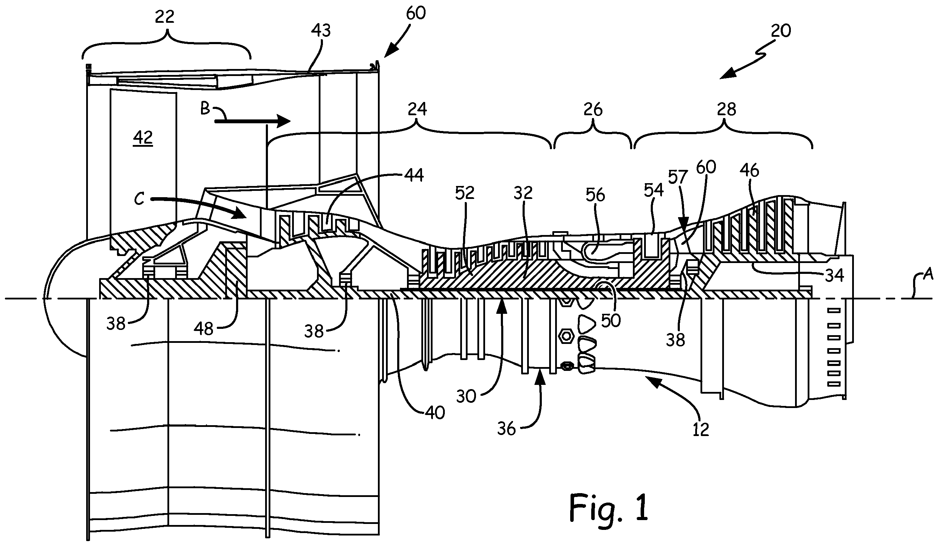

FIG. 1 schematically illustrates an example gas turbine engine 20 that includes fan section 22, compressor section 24, combustor section 26 and turbine section 28. Alternative engines might include an augmenter section (not shown) among other systems or features. Fan section 22 drives air along bypass flow path B while compressor section 24 draws air in along core flow path C where air is compressed and communicated to combustor section 26. In combustor section 26, air is mixed with fuel and ignited to generate a high pressure exhaust gas stream that expands through turbine section 28 where energy is extracted and utilized to drive fan section 22 and compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section. It should be further understood that the disclosed non-limiting embodiment provides generally a ballistic barrier that is suitable for many types of rotating or rotary machines as known to those of ordinary skill in the art.

The example engine 20 generally includes low speed spool 30 and high speed spool 32 mounted for rotation about an engine central longitudinal axis A relative to an engine static structure 36 via several bearing systems 38. It should be understood that various bearing systems 38 at various locations may alternatively or additionally be provided.

Low speed spool 30 generally includes inner shaft 40 that connects fan 41 and low pressure (or first) compressor section 44 to low pressure (or first) turbine section 46. Inner shaft 40 drives fan 41 through a speed change device, such as geared architecture 48, to drive fan 41 at a lower speed than low speed spool 30. High-speed spool 32 includes outer shaft 50 that interconnects high pressure (or second) compressor section 52 and high pressure (or second) turbine section 54. Inner shaft 40 and outer shaft 50 are concentric and rotate via bearing systems 38 about engine central longitudinal axis A.

Combustor 56 is arranged between high pressure compressor 52 and high pressure turbine 54. In one example, high pressure turbine 54 includes at least two stages to provide a double stage high pressure turbine 54. In another example, high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about five. The pressure ratio of the example low pressure turbine 46 is measured prior to an inlet of low pressure turbine 46 as related to the pressure measured at the outlet of low pressure turbine 46 prior to an exhaust nozzle.

Mid-turbine frame 58 of engine static structure 36 is arranged generally between high pressure turbine 54 and low pressure turbine 46. Mid-turbine frame 58 further supports bearing systems 38 in turbine section 28 as well as setting airflow entering low pressure turbine 46.

The core airflow C is compressed by low pressure compressor 44 and then by high pressure compressor 52, mixed with fuel and ignited in combustor 56 to produce high speed exhaust gases, and then expanded through high pressure turbine 54 and low pressure turbine 46. Mid-turbine frame 58 includes vanes 60, which are in the core airflow path and function as an inlet guide vane for low pressure turbine 46. Utilizing vane 60 of mid-turbine frame 58 as the inlet guide vane for low pressure turbine 46 decreases the length of low pressure turbine 46 without increasing the axial length of mid-turbine frame 58. Reducing or eliminating the number of vanes in low pressure turbine 46 shortens the axial length of turbine section 28. Thus, the compactness of gas turbine engine 20 is increased and a higher power density may be achieved.

The disclosed gas turbine engine 20 in one example is a high-bypass geared aircraft engine. In a further example, gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, gas turbine engine 20 includes a bypass ratio greater than about ten (10:1) and the fan diameter is significantly larger than an outer diameter of low pressure compressor 44. It should be understood, however, that the above parameters are only exemplary of one embodiment of a gas turbine engine including a geared architecture and that the present disclosure is applicable to other gas turbine engines.

A significant amount of thrust is provided by bypass flow B due to the high bypass ratio. Fan section 22 of engine 20 is designed for a particular flight conditiontypically cruise at about 0.8 Mach and about 35,000 feet. The flight condition of 0.8 Mach and 35,000 ft., with the engine at its best fuel consumption - also known as "bucket cruise Thrust Specific Fuel Consumption ('TSFC')" - is the industry standard parameter of pound-mass (lbm) of fuel per hour being burned divided by pound-force (Ibf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / 518.7°R]^{0.5}. The "Low corrected fan tip speed", as disclosed herein according to one non-limiting embodiment, is less than about 1150 ft/second.

The example gas turbine engine includes fan 41 that comprises in one non-limiting embodiment less than about twenty-six fan blades 42 and fan case 43 surrounding fan 41. In another non-limiting embodiment, fan section 22 includes less than about twenty fan blades 42. Moreover, in one disclosed embodiment low pressure turbine 46 includes no more than about six turbine rotors schematically indicated at 34. In another non-limiting example embodiment low pressure turbine 46 includes about three turbine rotors. A ratio between number of fan blades 42 and the number of low pressure turbine rotors is between about 3.3 and about 8.6. The example low pressure turbine 46 provides the driving power to rotate fan section 22 and therefore the relationship between the number of turbine rotors 34 in low pressure turbine 46 and number of blades 42 in fan section 22 disclose an example gas turbine engine 20 with increased power transfer efficiency.

In a turbofan engine, lighter components generally lead to more efficient performance. If less energy is expended moving internal engine parts, more energy is available for useful work. At the same time, the components themselves must be strong enough to withstand forces typical for the operating environment and performance envelope. Safety considerations based on the frequency and/or severity of possible failure will often dictate that the engine components also be able to withstand certain atypical, yet foreseeable events as well. Because stronger components are often heavier and/or more expensive, a balance must be struck between efficiency, safety, and cost.

Few locations in an aircraft are more representative of efforts to optimize the balance between efficiency, safety, and cost than engine 20. While lighter materials are preferable to improve efficiency, the high risk of severe consequences from engine damage will require that engine 20 be made of components having additional margins of safety. Blades made entirely from high-strength materials, such as titanium or titanium alloys like Ti-6Al-4V, have been proven to offer sufficient hardness to resist erosion and foreign object damage. But titanium alloys are often expensive to purchase and manipulate into a finished blade, particularly in a hollow configuration. Additionally, titanium fan blades are usually heavier than other options. Fiber composites offer significant weight savings relative to titanium and its alloys, but are also expensive to fabricate. Hollow titanium blades decrease weight, but are not usually cost-effective in smaller engines with smaller components and therefore a smaller cavity due to the need to have a certain thickness in blade walls to maintain adequate structural support. In small engines, the costs saved by reducing weight through hollow blades are frequently offset by added processing costs to form the smaller cavity. Further, even in larger blades, current hollow metal blades are relatively expensive to manufacture.

Using a lower-cost metallic material for the airfoil body, such as an aluminum alloy, can reduce the weight of a blade and can be produced at low cost. However, blades formed from a lightweight metallic material, such as aluminum, need additional support or reinforcement to offer sufficient strength and durability for long-term use. Without additional fortification against foreign object damage, such unprotected aluminum blades are susceptible to rapid deterioration and shorter lifecycles under normal operating conditions.

Small-scale deterioration typically consists of pitting, nicks, dings, and erosion from sand, rain, and small runway debris. As atmospheric air is drawn into engine 20 by fan section 22, air is forced chordwise over a leading edge of the blades 42. The air frequently brings debris that bombard the blades and compromise their aerodynamic shape, causing blades to depart significantly from their intended design. When blades lose their shape, efficiency decreases and fuel consumption increases.

This deterioration occurs relatively quickly in unprotected aluminum blades regardless of their overall strength. Additionally, unprotected aluminum blades are more susceptible to unplanned failures from larger foreign object strikes, potentially requiring immediate expensive repairs, replacement, downtime for the engine, or catastrophic failure. In an example case of aluminum alloy fan blades having no additional protection, pitting and erosion can occur, thus necessitating shorter maintenance and replacement time horizons for unprotected lightweight blades.

Reinforcing and protecting outer surfaces of a lightweight aluminum blade with a titanium foil can reduce the weight of the blade while meeting or exceeding current design and safety requirements. Because the blade needs the titanium foil to resist deterioration, it is critical to ensure that the titanium foil is securely bonded to the blade. Due to the extreme environment of engine 20 and a possible lifespan of 20-30 years for a blade, the method of attaching the titanium foil must be reliable and strong.

The following figures show a fan blade made of an aluminum alloy with a titanium foil, and describe the process of securely bonding the foil to the blade to ensure it reliably bonds to and protects the blade. The blade can be adapted for use in example engine 20 shown in FIG. 1. In addition, the example blades described below can also be readily adapted for other types of gas turbine engines.

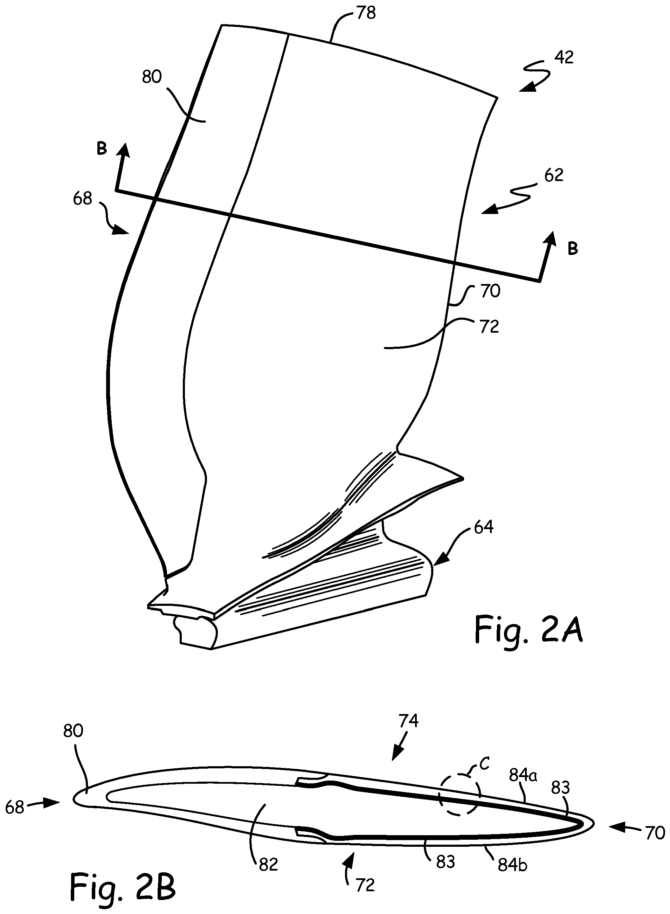

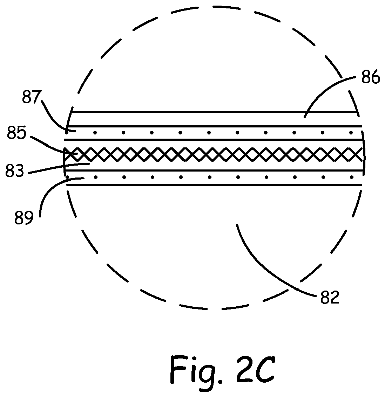

FIG. 2A shows a side view of blade 42, not embodying the present invention, and FIG. 2B shows a cross-sectional view of the blade of FIG. 2A along line B-B. FIG. 2C shows an enlarged view of section C of FIG. 2B. Blade 42 includes airfoil 62, root 64, leading edge 68, trailing edge 70, suction surface 72, pressure surface 74, tip 78, sheath 80, aluminum body 82, adhesive 83 with insulation 85, titanium foil sheets 84a, 84b, titanium primer 87 and aluminum primer 89.

Root 64 fits into a disc (not shown) to rotate blade 42 within fan section 22. Sheath 80 can be made of titanium (including alloys) or other materials with sufficient strength to protect blade 42 leading edge 68 when engine 20 is in operation.

Blade 42 with airfoil 62 and root 64 is an aluminum material (including alloys) to provide a lightweight blade without a complicated and expensive manufacturing process. Aluminum body 82 of blade can be formed by machining or other means.

Titanium foil sheets 84a, 84b are connected to pressure surface 74 and suction surface 72 of aluminum body 82 with insulated adhesive 83. In FIG. 2B, titanium foil sheet 84a covers pressure surface 74 from trailing edge 70 to just under sheath 80 and from tip 78 to root 64; and titanium foil sheet 84b covers suction surface 72 from trailing edge 70 to just under sheath 80 and from tip 78 to root 64. According to the invention, airfoil 62 has a titanium foil layer covering one of the entire pressure surface 74 or the entire suction surface 72. Titanium foil can be about 0.127 mm (0.005 inches) thick.

Sheath 80 covers airfoil 62 proximate leading edge 68, protecting airfoil 62 leading edge 68 from foreign object damage. As can be seen in FIG. 2B, titanium foil sheets 84a, 84b can extend under sheath 80, which can help to ensure titanium foil sheets 84a, 84b stay adhered to aluminum body 82 and can help reduce or prevent cracking and corrosion at the interface of sheath 80 and airfoil 62.

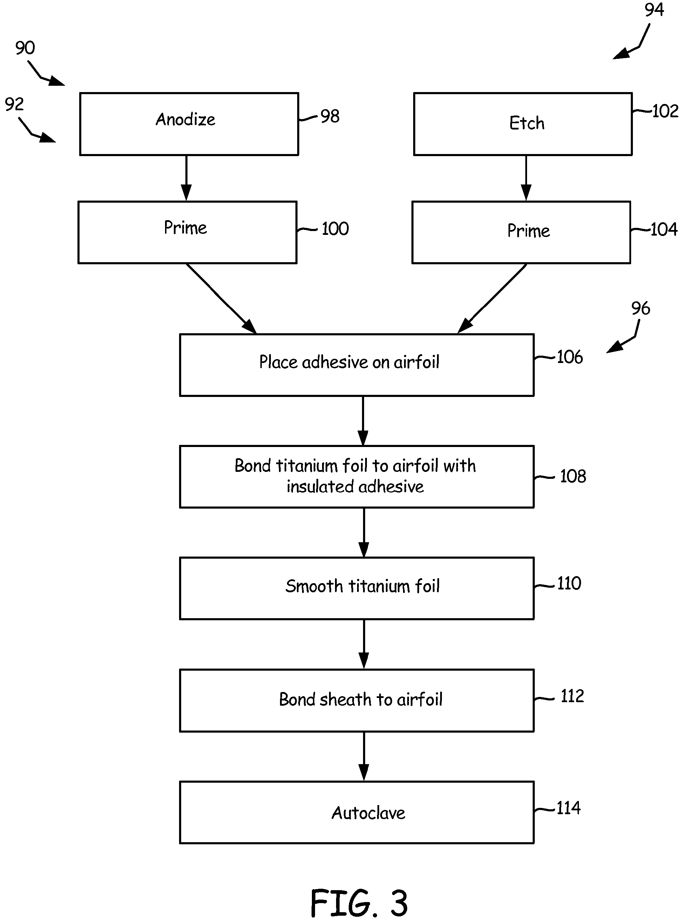

Airfoil 62 surfaces which will receive titanium foil sheets 84a, 84b can be surface treated for bonding in the method described below with respect to FIG. 3, and a thin layer of primer 89 can be applied the receiving surfaces. Titanium foil sheets 84a, 84b inner surfaces can be surface treated according the method described below with respect to FIG. 3, and primer 87 can be applied to inner surfaces titanium foil sheets 84a, 84b. An insulating material 85, for example, a scrim sheet or weave, can be embedded in adhesive 83. Adhesive 83 bonds titanium foil sheets 84a, 84b to airfoil 62.

Adhesive 83 can be one of a variety of commercially available aerospace-quality metal-bonding adhesives, including several epoxy- and polyurethane-based adhesive films. In some embodiments, the adhesive is heat-cured via autoclave or other similar means. Examples of suitable bonding agents include type Hysol EA 9628 supported epoxy film adhesive available from Henkel Corporation, Aerospace Group, Bay Point, California and type AF3109-2 epoxy adhesive available film from 3M Adhesives, Coatings & Sealers Division, St. Paul, Minn. In certain embodiments, adhesive 83 can be a film, which would contribute a minute amount of thickness of blade 42. Despite the additional thickness, a film-based adhesive 83 allows for generally uniform application, leading to a predictable thickness to be accounted for in sizing titanium foil sheets 84a, 84b, as well as the thickness of airfoil 62.

As mentioned above, insulating material 85, such as a scrim sheet or a weave, can be embedded into adhesive 83 and helps to provide dielectric separation between airfoil 62 and titanium foil sheets 84a, 84b, preventing galvanic corrosion between the two different metal surfaces of airfoil 62 and titanium foil sheets 84a, 84b. The material forming the insulating material is often determined by its compatibility with adhesive 83, and can be, for example, a flexible fiberglass weave with a thickness between about 0.004 inch (0.010 cm) and about 0.009 inch (0.023 cm) thick.

Bonding of titanium foil sheets 84a, 84b to airfoil 62 with adhesive 83, and separating the dissimilar metals with an insulating adhesive 83 improves several aspects of blade 42. When titanium foil sheets 84a, 84b are produced separately and the contact surfaces of airfoil 62 and titanium foil sheets 84a, 84b are properly prepared for bonding with treatments as described below with respect to FIG. 3, complex high temperature bonding and forming processes are not necessary (with the exception of the 250 degree F autoclave cure for curing adhesive 83). Thus, little to no deformation is caused, allowing airfoil 62 to retain its shape and integrity during the bonding of titanium foil sheets 84a, 84b. Furthermore, as mentioned above, insulating adhesive 83 helps reduce or prevent galvanic corrosion by ensuring at least a minimal separation between titanium foil sheets 84a, 84b and airfoil 62.

In past blades, airfoil 62 was coated with an erosion coating that acted as a corrosion barrier, for example, a polyurethane coating. The interfaces of the coating, for example, where the sheath 80 was bonded to the airfoil 62, were vulnerable areas for crevice corrosion. Additionally, the bond strength of the coating can be lower than desired, especially when approaching elevated temperatures.

By using titanium foil sheets 84a, 84b to cover at least the entire pressure surface 74 and/or suction surface 72 and bonding it with a structural epoxy adhesive, airfoil 62 is a light-weight blade with strong wear and erosion resistance that can withstand high temperatures. Using titanium foil can also result in a smoother surface to give better aerodynamic properties and increased protection against crevice corrosion.

FIG. 3 shows a block diagram of an example method for making titanium foil covered airfoil 62. Method 90 includes process 92 for treating bonding surface of airfoil 62, process 94 treating bonding surface of titanium foil sheets 84a, 84b, and process 96 for bonding titanium sheets 84a, 84b to airfoil 62 of blade 42.

Process 92 for treating bonding surface of aluminum airfoil 62 generally is referred to as phosphoric acid anodizing, and can include the following steps: anodize 98, and prime 100.

Anodizing (step 98) can be done by making airfoil 62 anodic for about 20 to about 25 minutes at about 15 volts in a solution of about 7.5% phosphoric acid at about 77 degrees F (plus or minus about 5 degrees F). Anodizing (step 98) generates an oxide layer on bonding surface with a particular morphology that promotes adhesive bond strength. Airfoil 62 can then be rinsed and dried to remove any acid solution. Drying can be done at a maximum of about 160 degrees F. Airfoil 32 is then primed (step 100) with a thin layer of epoxy with a corrosion inhibiting material, such as a chromate-containing compound, which can then be cured.

Process 94 for treating bonding surface of titanium foil sheets 84a, 84b can include the following steps: alkaline etch 102 and prime 104. Alkaline etch (step 102) is generally done with a strong alkaline etchant. For example a Turco etching solution, such as Turco 5578-L, could be used at about 190 degrees F (plus or minus about 10 degrees F) for about 5 minutes. The etching process prepares inside surfaces of titanium foil sheets 84a, 84b for bonding to airfoil 62 pressure surface 74 and suction surface 72 by removing oils and loose oxides on the surface without damaging or changing the shape of titanium foil sheets 84a, 84b. Next, titanium foil sheets 84a, 84b can be desmutted (if needed), rinsed and dried to prepare for priming (step 104). A thin layer of resin primer 87 can be applied to inside surfaces of titanium foil sheets 84a, 84b and cured to stabilize and preserve the surface for adhesive bonding to the blade. The primer 87 is generally an epoxy and may contain a corrosion inhibiting material such as a chromate-containing compound.

Process 96 for bonding titanium foil sheets 84a, 84b airfoil 62 includes: placing adhesive on airfoil 106, bonding titanium foil sheets 84a, 84b to airfoil 62 with insulated adhesive 108; smoothing titanium foil sheets 110; and autoclaving blade 112.

The adhesive 83 placed on airfoil 62 (step 106) must have sufficient strength to securely hold titanium foil sheets 84a, 84b to airfoil 62 in extreme aerospace conditions, including during impact events. Suitable adhesives include a wide variety of high-strength epoxy-based adhesives including Henkel EA 9628 and 3M type AF163K epoxy adhesives. Adhesive can be in film form and can include a scrim sheet or a weave.

Bonding titanium foil sheets 84a, 84b to airfoil 62 with insulated adhesive 108 (step 108) can be done using adhesives and insulating material as described in relation to FIGS. 2A-2B and at temperatures around 394 K (250 degrees F).

Smoothing titanium foil sheets 84a, 84b (step 110) can be done by rolling or another technique to ensure the titanium foil sheets 84a, 84b conform as much as possible to the airfoil 62. This could include slitting or darting titanium foil sheets 84a, 84b depending on airfoil 62 surface. Step 110 can result in a smoother surface over past blades, which can increase aerodynamic efficiency of overall blade 42.

Bonding sheath 80 to airfoil (step 112) can be done using an adhesive to bond sheath 80 so that it extends slightly over titanium foil sheets 84a, 84b. Bonding can be done using any suitable adhesive depending on sheath 80 materials.

Autoclaving (step 114) can be done by placing blade 42 in an autoclave at about 394 K (250 degrees F) for about 2 hours under about 30 psi (206.8 kPa) to about 50 psi (344.7 kPa).

Surface treating titanium foil sheets 84a, 84b and airfoil 62 on their respective bonding surfaces before bonding together with adhesive ensures a reliable bond of sufficient strength for airfoil 62 to retain titanium foil sheets 84a, 84b as protection throughout the years blade 42 is in service in engine 20. Surface treating of titanium foil sheets 84a, 84b in process steps 94 creates a microroughness on the bonding surface which enhances adhesive bond strength. Surface treating of airfoil 62 in process steps 92 creates a surface which enhances adhesive bond strength to airfoil 62. Method of bonding 96 ensures the bond between airfoil 62 and titanium foil sheets 84a, 84b is sufficiently strong to withstand normal operating conditions as well as many impact events, such as a birdstrike.

Method 90 of bonding titanium foil sheets 84a, 84b to blade 62 makes the use of the desireable light-weight aluminum alloy blade with one or more protective titanium foil sheets 84a, 84b possible. Method 90 allows for the use of the aluminum alloy blades with one or more titanium foil sheets instead of the more expensive and heavier titanium blades or the difficult to manufacture composite blades by ensuring protective titanium foil sheets 84a, 84b will stay bonded to the lightweight blade 62, and therefore maintain similar levels of strength and durability of past (titanium or composite) blades.

Titanium foil sheets 84a, 84b covers airfoil 62 pressure surface 74 and suction surface 72, protecting airfoil 62 from erosion and wear, even when airfoil 62 is made of a lightweight and more ductile material like an aluminum alloy. The overlap of sheath 80 onto titanium foil sheets 84a, 84b provides significant crevice corrosion protection.

In summary, the bonding method allows for the use of a lightweight aluminum airfoil with one or more titanium foil sheets 84a, 84b to form a blade 42 suitable for use in aerospace engines. Substituting a lighter material, such as an aluminum alloy, in airfoil 62 improves both initial raw material costs and engine efficiency by reducing the overall weight of blade 42. The reduced weight also allows for use of heavy but strong titanium as a foil on one or both of suction surface 72 and pressure surface 74, while still saving weight overall in blade 42. Having titanium foil sheets 84a, 84b allows for more strength and resiliency to resist deterioration and erosion damage to blade 42, as well as extending the serviceable life of blade 42. The bonding method of surface treating and priming the titanium foil sheets, surface treating and priming the airfoil, and then bonding the titanium foil sheets to the airfoil ensures a reliable and strong bond, making the use of a lightweight aluminum airfoil with titanium foil sheets possible.

The above examples of the relative sizes of the components of blade 42 is included for illustrative purposes only and can readily be adapted by one skilled in the art for a variety of engine and blade designs. The dimensions of titanium foil sheets 84a, 84b will vary depending on a number of factors, including the size and shape of blade 42.

It should be noted that while a solid blade 42 is shown and described in this disclosure, this specification and the appended claims are not so limited. The invention is readily adaptable to hollow blades 42, the use of which in conjunction with titanium foil sheets 84a, 84b as described herein, will only add to the cost and weight savings achieved.

While the surface treatment of aluminum alloy airfoil has been described in reference to phosphoric acid anodizing, other surface treatments which prepare aluminum airfoil for bonding with titanium foil sheets could be used. Additionally, while the surface treatment of titanium foil sheets have been described in terms of etching, other treatments could be used to prepare titanium foil sheets for bonding with airfoil. Alternative treatments could include sol-gel processing of either bonding surface and/or anodizing of the airfoil surface.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An airfoil comprising:
an aluminum airfoil body (82) with a pressure side (74), suction side (72), leading edge (68) and trailing edge (70); and
a titanium foil layer (84a, 84b)
**characterised in that**
the titanium foil layer covers at least one of the entire pressure side or the entire suction side.

2. The airfoil of claim 1, wherein the titanium foil layer covers at least part of the other one of the pressure side and the suction side.

3. The airfoil of claim 1 or 2, wherein the titanium foil layer is 0.127 mm (0.005 inches) thick.

4. The airfoil of any preceding claim, and further comprising: a sheath (80) to define the leading edge of the airfoil.

5. The airfoil of claim 4, wherein the titanium foil layer extends under the sheath.

6. The airfoil of any preceding claim, and further comprising: adhesive (83) bonding the titanium foil layer to the airfoil.

7. The airfoil of any preceding claim, wherein the adhesive is scrim supported adhesive or weave supported adhesive.

## Patentansprüche

1. Schaufel, Folgendes umfassend:
einen Aluminiumschaufelkörper (82) mit einer Druckseite (74), einer Saugseite (72), einer vorderen Kante (68) und einer hinteren Kante (70); und
eine Titanfolienschicht (84a, 84b),
**dadurch gekennzeichnet, dass**
die Titanfolienschicht mindestens eine der gesamten Druckseite oder der gesamten Saugseite bedeckt.

2. Schaufel nach Anspruch 1, wobei die Titanfolienschicht mindestens einen Teil der anderen der Druckseite und der Saugseite bedeckt.

3. Schaufel nach Anspruch 1 oder 2, wobei die Titanfolienschicht 0,127 mm (0,005 Zoll) dick ist.

4. Schaufel nach einem der vorhergehenden Ansprüche und ferner Folgendes umfassend:
eine Hülle (80), um die vordere Kante der Schaufel zu definieren.

5. Schaufel nach Anspruch 4, wobei die Titanfolienschicht sich unter der Hülle erstreckt.

6. Schaufel nach einem der vorhergehenden Ansprüche und ferner Folgendes umfassend:
ein Klebemittel (83), das die Titanfolienschicht an die Schaufel bindet.

7. Schaufel nach einem der vorhergehenden Ansprüche, wobei das Klebemittel ein gelegegestütztes Klebemittel oder ein gewebegestütztes Klebemittel ist.

## Revendications

1. Profil aérodynamique comprenant :
un corps de profil aérodynamique en aluminium (82) avec un intrados (74), un extrados (72), un bord d'attaque (68) et un bord de fuite (70) ; et
une couche en feuille de titane (84a, 84b),
**caractérisé en ce que**
la couche en feuille de titane couvre au moins un parmi l'intrados entier ou l'extrados entier.

2. Profil aérodynamique selon la revendication 1, dans lequel la couche en feuille de titane couvre au moins une partie de l'autre parmi l'intrados et l'extrados.

3. Profil aérodynamique selon la revendication 1 ou 2, dans lequel la couche en feuille de titane présente une épaisseur de 0,127 mm (0,005 pouce).

4. Profil aérodynamique selon une quelconque revendication précédente, et comprenant en outre :
une gaine (80) pour définir le bord de fuite du profil aérodynamique.

5. Profil aérodynamique selon la revendication 4, dans lequel la couche en feuille de titane s'étend sous la gaine.

6. Profil aérodynamique selon une quelconque revendication précédente, et comprenant en outre :
l'adhésif (83) collant la couche en feuille de titane au profil aérodynamique.

7. Profil aérodynamique selon une quelconque revendication précédente, dans lequel l'adhésif est un adhésif supporté par canevas ou un adhésif supporté par tissage.
